# EUROPEAN PATENT APPLICATION

(11) **EP 2 180 466 A2**
(43) Date of publication of application: **28.04.2010**
(21) Application number: 09172965.7
(22) Date of filing: 14.10.2009
(51) Int. Cl.: G11B 5/40

(54) **Improvements introduced in magnetic card reader with protection against thermal and exothermic chemical attack and assembly process**

(30) Priority: 22.10.2008 BR 08057842
(71) Applicant: Tecvan Informática LTDA., Município de Ilhéus - Estado da Bahia (BR)
(72) Inventor: Dias Rodrigues, Wagner, Município de São Bernardo do Campo Estado de São Paulo (BR)
(74) Representative: Robba, Pierpaolo

(57) **Abstract**

Improvements that were specially developed in view to reducing the final cost of the product, for this it is equipped high security sensor circuits with protection against thermal and exothermic chemical attack, in a way to so as to protect information and secret processes, stored by electronic means against unauthorized access.

## Description

### TECHNICAL FIELD

The present invention deals with the improvements introduced in a magnetic card reader with protection against thermal and exothermic chemical attack, improvements which were specially developed in view to reducing the final cost of the product, for this it is equipped high security sensor circuits with protection against thermal and exothermic chemical attack, in a way to so as to protect information and secret processes, stored by electronic means against unauthorized access.

### TECHNICAL BASIS

As is known, the Points of Sale terminals (POS, PDV, PINPAD, encrypted keyboard) allow clients to pay their to pay their bills using several payment methods, such as credit cards, debit cards, smart cards etc.

To guarantee that the payment information transmitted from one of the sales point terminals until the center of payments is not intercepted, such information is normally encrypted and protected during transmission, using, for example, digital authentication technology.

Therefore, the confidential payment information, keyed in by the user at a Point of Sale, could still be intercepted by a physical violation of the Point of Sale.

To impede such interception and any violation of the magnetic card reading device, is already anticipated, by the technical method of a physical method where a magnetic head is assembled in a way to protect the reader contacts, impeding access to these contacts. This protection is by enveloping the magnetic head terminals with a malleable printed circuit and these in a chemical resin, in away to mechanically protect the terminals so that they are totally inaccessible from external attacks.

The mentioned malleable printed circuit has several electronic layers on top of each other, where the more outer layers have a random mosaic electronic circuit that, when broken or perforated, are detected by specialized security circuits. In the more inner layers, which are protected, they transmit on the traces electrical signals of the magnetic head terminals, correctly said. The break in any part of the malleable tape of the circuit in an attempted system invasion causes the security circuit activation.

On the inner face of the malleable printed circuit are assembled security circuits with temperature sensors which detect thermal variations in the magnetic head. These temperature sensors are connected to the electronic security circuit of the malleable printed circuit with solder, which reacts to any thermal variation by changing its electrical impedance. This change in impedance should be monitored by an external security circuit which should be connected to the magnetic head reader and set off a security response, activating an alarm or destroying stored information, returning to the concept of security of the Point of Sale terminals.

The solution already presented in the prior art concept also has a protection against mechanical attacks of cutting and perforation of the magnetic head and the malleable tape circuit, using a random electronic mesh which is connected to the security circuit which detects any mechanical attack attempt. The attempt to mechanically remove the thermal sensors also causes an impedance change in it.

Most solutions currently found only protect the magnetic head circuit against mechanical attacks of the perforation or mechanical breaking type but do not protect against thermal or exothermic chemical processes which try to break through the resin without damaging the security circuits. In these systems, a physical envelope of the circuit terminals in the form of a mesh protects access to the terminals, using a constant electric current which detects the interruption of this current, when there is a break in the protective mesh. This method has a weak point in the possibility that an invader can remove the protective resin using thermal or exothermic chemical processes without mechanically damaging the protection mesh and so obtaining access to the terminals without the sensor detecting. In other words, the premise that thermal or exothermic chemical attacks inevitably cause the mechanical break in the protective meshes is not valid.

Besides the current protection systems having this failure in protection, they use magnetic heads with SMD type terminals which are expensive.

### BRIEF DESCRIPTION OF THE INVENTION

As a result of the prior art concept analysis, the improvement here described proposes a technical innovation with protection resources to impede unauthorized access of circuits inside the Point of Sale terminal at reduced costs.

With the improvement proposed in this patent a significant increase in security is obtained, if introduced, besides mechanical protection, a dynamic temperature monitoring inside the magnetic head whose transducer will vary with impedance, which is being monitored by the electronic security circuit.

It is the premise that the magnetic card reader connected to a system of overall security of the Point of Sale Terminal devices, that increases the protective effectiveness concept applied to the device, having a surveillance process that encrypts information and secret processes, destroying first the encryption keys used in the process if a violation event is detected by the monitoring circuit.

The proposed solution uses the magnetic head terminations with through-hole type contacts, which are cheaper compared to the SMD type characterizing the system as low cost.

The proposed solution to detect a thermal and/or exothermic chemical attack uses passive semiconductor devices integrated into the protective electronic mesh. These are soldered in a protected form on the inner surface of the circuit in malleable tape, such that, with a temperature increase, the semiconductor device will signal by the change in its conductivity that it is interpreted by the security circuit as an attack. The thermal and/or exothermic attack characterized by the phenomenon of a temperature increase will be detected as an attack on the terminal.

### DESCRIPTION OF THE DRAWINGS

Therefore, in order to allow a better clarification of the object in question, let's proceed to its detailed description with reference to the drawings below where:
figure 1 illustrates the external perspective view of a magnetic card reader assembly, where in view is the magnetic card cardan, the magnetic card reader assembled on a spring and with the respective circuit in malleable tape , being the prior art concept;
figure 2 illustrates rear view of the magnetic head assembly, where there are the electrical connections. In this illustration, the through-hole type terminals can be seen with the respective circuit in malleable tape before its envelope and with the temperature sensors assembled on the inner face of the circuit in malleable tape;
figure 3 illustrates rear view of the final magnetic head assembly where is seen the sequence of circuit folds in malleable tape already closed, protecting the security circuits;

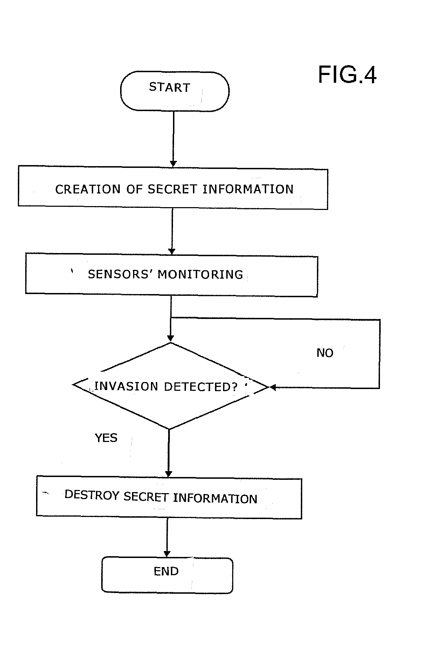

figure 4 illustrates the operational flowchart of the violation detector circuit.

### DETAILED DESCRIPTION OF THE OBJECT OF THE INVENTION

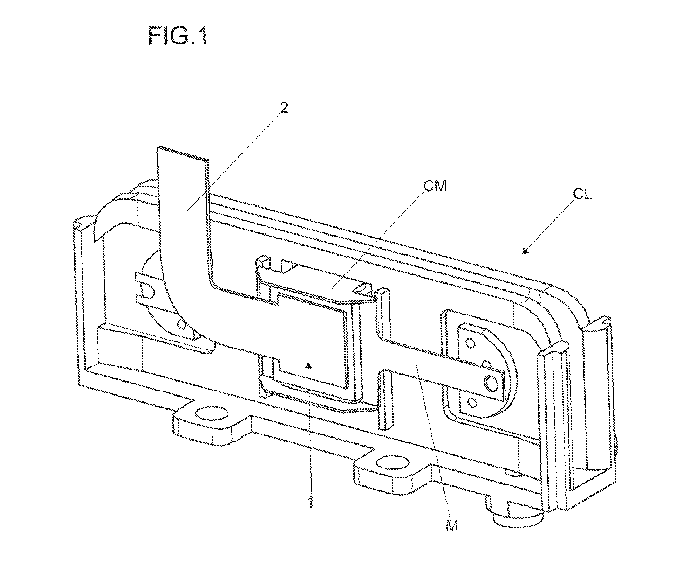

In conformity with the illustrated figures above mentioned, the object of the present invention consists of "IMPROVEMENTS INTRODUCED IN MAGNETIC CARD READER WITH PROTECTION AGAINST THERMAL AND EXOTHERMIC CHEMICAL ATTACK AND ASSEMBLY PROCESS", being the said device (1) of the type applied in a magnetic card reader assembly (CL), in figure 1 it is possible to see the magnetic card cardan (CM), the magnetic card reader (1), now innovated , assembled on a spring (M) and with the respective malleable tape circuit (2).

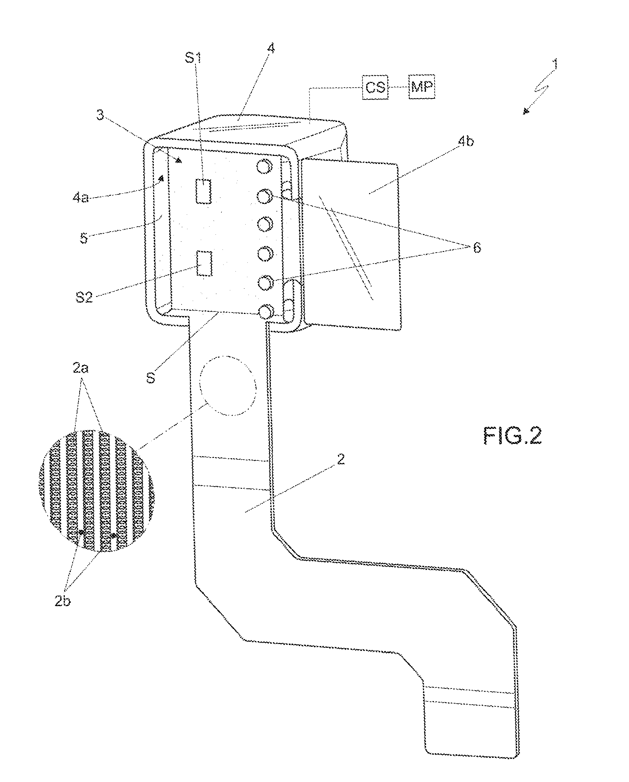

In accordance with the present invention, the device (1) of magnetic head with mechanical protection and sensor of thermal and exothermic chemical attack, it is made of a magnetic head (3) encapsulated in a metallic envelope (4), filled with resin (5), with through-hole terminals (6) accessible from face (4a) which can be opened for an access door (4b), integrant of the metallic envelope (4), as in figure 2.

The circuit in multi-layered malleable tape (3), has the basic function of carrying the collected signals in the magnetic head terminals (3) to the main circuit of the Point of Sale Terminals (not illustrated); the tape (2) is soldered (S) on the through-hole type terminals (6) of the magnetic head (3), as in figure 2. The carrying of the collected signals is made in the more inner layers of the malleable tape circuit (2), making it impossible to directly access these signals, unless they break the outer layers of the malleable tape circuit.

The outer layers of the multi-layered malleable tape circuit (2) are protected in a form of having on the whole surface fine conducting pathways (2a) distributed in a random form and very dense, in the form of a coil (detail figure 2). The terminations of these traces (2a) are connected to the security circuits (CS) which are monitoring, through the microprocessor (MP) their breaking. With this, if there is an attempt to mechanically peel off the outer circuit to access the inner traces, the outer protective traces (2a) are broken, activating the security system.

The same occurs if there is an attempt to mechanically perforate the outer layers to access the inner traces (2b), which causes the breaking of one or more protection traces (2a).

Also in figure 2, can be seen the two temperature sensor devices (S1) and (S2) assembled on the malleable tape circuit and soldered to the thermal detection security traces (not illustrated). These passive semiconductor devices change their impedance in proportion to the temperature applied on their bodies. The thermal detection security traces should be connected to an electronic circuit inside the magnetic head (3) which monitors this impedance and when it reaches limits defined as thermal attacks activates the security system circuit.

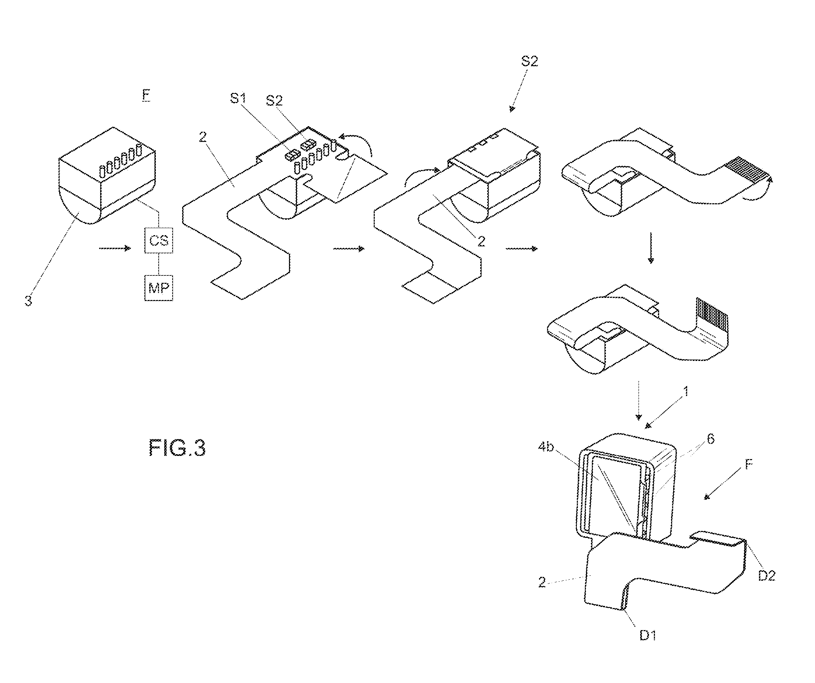

In figure 3 is shown the enveloping process of the device, whose stages follow the following steps: the magnetic head (3) and the thermal sensors (S1) and (S2) receive the overlap of the malleable tape circuit (2), which is folded on the terminals (6) of the magnetic head (3) and on the referred to thermal sensors; on this circuit in malleable tape (2), protective chemical resins are deposited, making them externally inaccessible and therefore inviolable; the magnetic head (3) assembly is inserted in the envelope (4).

The functioning occurs in the following form: the security system circuit, outside the magnetic card reader device (1), when detecting the invasion of the secure area, activates the sensor (S1) which communicates to the microprocessor (MP) which activates destroying all the security keys (CS) which encrypt the secret information stored in the electronic memory. Without the security keys, it is not possible to recuperate secret information from the memory and carry out secret processes making the equipment inoperable. Inside the microprocessor there is a true random number generator.

The random numbers of this generator are used to create signal forms of amplitude, frequency and phase parameters for the sensors. These signals pass through the sensor group and return to the microprocessor, whose comparing circuits check the referred parameters of the original signals.Detecting differences in the parameters, the invasion alarm circuit is activated and immediately secret information is destroyed turning the equipment inoperable and making it impossible to recuperate the information. It is certain when the present invention is put into practice, there can be introduced changes in reference to certain construction details and form, without this implying withdrawing from the fundamental principles which are clearly substantiated in the claim summary, being understood that the terminology used is in order to describe and not limit.

## Claims

1. st) "IMPROVEMENTS INTRODUCED IN MAGNETIC CARD READER WITH PROTECTION AGAINST THERMAL AND EXOTHERMIC CHEMICAL ATTACK AND ASSEMBLY PROCESS"., the being the device (1) of the type applied in a magnetic card reader assembly (CL), in figure 1 it is possible to see the magnetic card cardan (CM), the magnetic card reader (1), now innovated, assembled on a spring (M) and with the respective malleable tape circuit (2)**characterized by** the fact the device (1) of magnetic head with mechanical protection and sensor of thermal and exothermic chemical attack, it is made of a magnetic head (3) encapsulated in a metallic envelope (4), filled with resin (5), with through-hole terminals (6) accessible from face (4a) which can be opened for an access door (4b), integrant of the metallic envelope (4), a circuit is planned in multi-layered malleable tape (3) which carries the collected signals in the magnetic head terminals (3) to the main circuit of the Point of Sale Terminals the tape (2) is soldered (S) on the through-hole type terminals (6) of the magnetic head (3) the outer layers of the circuit in multi-layered malleable tape(2)are designed in a form of having on the whole surface fine conducting pathways (2a) distributed in a random form and very dense, in the form of a coil,the terminations of these traces (2a) are connected to the security circuits (CS) which are monitoring, through the microprocessor (MP) their breaking, are planned two temperature sensors (S1)and (S2) assembled on the malleable tape circuit and soldered to the thermal detection security traces, being passive semiconductor devices change their impedance in proportion to the temperature applied on their bodies.

2. nd) "ASSEMBLY PROCESS", IN ACCORDANCE WITH THE 1^{ST} CLAIM ***characterized* by** the fact the device enveloping process folows the following steps: the magnetic head (3) and the thermal sensors (S1) and (S2) receive the overlap of the malleable tape circuit (2), which is folded on the terminals (6) of the magnetic head (3) and on the referred to thermal sensors; on this circuit in malleable tape (2), protective chemical resins are deposited, making them externally inaccessible and therefore inviolable; the magnetic head (3) assembly is inserted in the envelope (4).

3. rd) **"IMPROVEMENTS INTRODUCED IN MAGNETIC CARD READER WITH PROTECTION AGAINST THERMAL AND EXOTHERMIC CHEMICAL ATTACK AND ASSEMBLY PROCESS".,** in accordance with claims 1 and 2, ***characterized* by** carrying the collected signals to be made in the inner layers of the malleable tape circuit (2).

4. th) **"IMPROVEMENTS INTRODUCED IN MAGNETIC CARD READER WITH PROTECTION AGAINST THERMAL AND EXOTHERMIC CHEMICAL ATTACK AND ASSEMBLY PROCESS",** In accordance with the claims 1 and 2 and in the case of there is an attempt to mechanically unpeel the outer circuit ***characterized* by** the fact that outer protection traces (2a) being broken activate the security system.

5. th) "IMPROVEMENTS INTRODUCED IN MAGNETIC CARD READER WITH PROTECTION AGAINST THERMAL AND EXOTHERMIC CHEMICAL ATTACK AND ASSEMBLY PROCESS", in accordance with the claims 1 and 2 and in case there is an attempt to mechanically perforate the outer layers to access the inner traces (2b), ***characterized* by** the fact the outer protection traces (2a) being broken activate the security system.

6. th) **"IMPROVEMENTS INTRODUCED IN MAGNETIC CARD READER WITH PROTECTION AGAINST THERMAL AND EXOTHERMIC CHEMICAL ATTACK AND ASSEMBLY PROCESS**", in accordance with the claims 1 and 2, ***characterized* by** the fact thermal detection security traces are connected to an electronic circuit inside the magnetic head (3) which monitors the impedance of the sensors(S1) and (S2) which when it reaches limits defined as thermal attacks activates the security system circuit.
